# FASCICULE DE BREVET EUROPEEN

(11) **EP 3 513 628 B1**
(45) Date de publication et mention de la délivrance du brevet: **26.06.2024**
(21) Numéro de dépôt: 17776967.6
(22) Date de dépôt: 18.09.2017
(51) Int. Cl.: G01S 17/89, G01S 17/93, G01S 7/484

(54) **CIRCUIT ÉLECTRONIQUE ET CAPTEUR DE TEMPS DE VOL COMPRENANT UN TEL CIRCUIT ÉLECTRONIQUE**
ELEKTRONISCHE SCHALTUNG UND FLUGZEITSENSOR MIT SOLCH EINER ELEKTRONISCHEN SCHALTUNG
ELECTRONIC CIRCUIT AND TIME-OF-FLIGHT SENSOR COMPRISING SUCH AN ELECTRONIC CIRCUIT

(30) Priorité: 16.09.2016 FR 1658704
(43) Date de publication de la demande: 24.07.2019
(73) Titulaire: Valeo Comfort and Driving Assistance, 94000 Créteil (FR)
(72) Inventeur: COUILLAULT, Jérôme, 94046 Créteil Cedex (FR); GRATZL, Peter, 94046 Créteil Cedex (FR)
(74) Mandataire: Delplanque, Arnaud
(86) Numéro de dépôt international: PCT/EP2017/073512
(87) Numéro de publication internationale: WO 2018/050897

(56) Documents cités:
- US-A1- 2007 268 239
- US-A1- 2010 243 897
- US-A1- 2014 211 192
- US-A1- 2014 293 038

## Description

### DOMAINE TECHNIQUE AUQUEL SE RAPPORTE L'INVENTION

La présente invention concerne l'alimentation des éléments émetteurs de rayonnement utilisés par exemple dans les capteurs de temps de vol.

Elle concerne plus particulièrement un circuit électronique et un capteur de temps de vol comprenant un tel circuit électronique.

L'invention s'applique particulièrement avantageusement dans le cas où l'on souhaite obtenir une bonne répétabilité du signal émis par le capteur de temps de vol.

### ARRIERE-PLAN TECHNOLOGIQUE

Dans les capteurs de temps de vol (en anglais *"ToF sensor*" pour *"Time-of-Flight sensor*"), un élément émetteur de rayonnement, tel qu'une diode électroluminescente, émet un signal donné, destiné à être détecté par un élément récepteur après réflexion sur un objet. On peut ainsi évaluer la distance de l'objet sur la base du temps écoulé entre l'émission du signal et sa réception au niveau de l'élément récepteur.

Afin d'obtenir un fonctionnement efficace, le signal émis est modulé à haute fréquence. L'élément émetteur doit ainsi être parcouru par un courant formé d'impulsions à haute fréquence et de niveau relativement élevé, avec des fronts montants et descendants très brefs.

Ces variations importantes du courant à haute fréquence empêchent a *priori* l'utilisation d'un régulateur de courant, dont la boucle de régulation a un temps caractéristique supérieur à la durée des impulsions précitées.

On utilise donc fréquemment pour alimenter l'élément émetteur de rayonnement une alimentation régulée en tension et une résistance transformant cette tension en courant. Le document US2014/0211192A1 divulgue un circuit électronique de commande pour diodes utilisant un interrupteur de modulation M2 monté en parallèle aux Leds.

Cette solution implique toutefois un échauffement et une perte d'efficacité par effet Joule dans la résistance précitée, une dérive en courant liée à la dérive en tension de la diode électroluminescente avec la température et une imprécision du courant obtenu liée à la variabilité de la tension aux bornes de la diode électroluminescente d'un produit à l'autre.

### OBJET DE L'INVENTION

Dans ce contexte, la présente invention propose un circuit électronique comprenant au moins un élément émetteur de rayonnement, un régulateur de courant avec une borne de régulation et une borne de production de courant , reliée à l'élément émetteur de rayonnement, un élément de mesure produisant un signal représentatif du courant le traversant, un interrupteur commandé par un signal de modulation de manière à successivement ouvrir et fermer un chemin électrique passant par la borne de production de courant, l'élément émetteur de rayonnement et l'élément de mesure, et un circuit de conversion interposé entre l'élément de mesure et le régulateur de courant, et conçu pour transformer le signal représentatif en un signal lissé (sans modulation) destiné à la borne de régulation, l'interrupteur commandé par le signal de modulation étant monté en série avec l'élément émetteur de rayonnement et la masse du circuit électronique.

Grâce au circuit de conversion, la régulation du courant au niveau du régulateur de courant ne sera pas perturbée par les interruptions de courant provoquées par l'interrupteur sous la commande du signal de modulation.

Un tel circuit permet ainsi d'alimenter l'élément émetteur de rayonnement avec un courant constant et de commander une modulation du courant dans l'élément émetteur à haute fréquence, comme cela est prévu par exemple dans un capteur de temps de vol.

L'élément émetteur est par exemple une diode électroluminescente ; le rayonnement émis par l'élément émetteur peut être, dans ce cas notamment, un rayonnement infrarouge.

Dans certains modes de réalisation, tels que celui décrit ci-après, on peut prévoir une pluralité d'éléments émetteurs montés en série sur le chemin électrique.

L'élément de mesure peut être en pratique une résistance, auquel cas le signal représentatif du courant est la tension aux bornes de cette résistance.

Le circuit de conversion est par exemple un filtre passe-bas. Dans ce cas, un tel filtre passe-bas peut avoir une fréquence de coupure inférieure à la fréquence du signal de modulation.

En variante, le circuit de conversion pourrait être un détecteur de crête (en anglais *"peak detector*"), ou un ensemble formé d'un convertisseur analogique-numérique et d'un processeur.

Un tel signal de modulation est par exemple un signal périodique, ici de période inférieure à 100 ns.

L'invention propose également un capteur de temps de vol comprenant un circuit électronique tel que proposé ci-dessus.

Un tel capteur de temps de vol peut comprendre en outre un élément récepteur, tel qu'une matrice de réception (comprenant une pluralité de pixels). L'élément récepteur peut alors être conçu pour recevoir, après réflexion, le rayonnement émis par l'élément émetteur de rayonnement. Un tel capteur de temps de vol forme une caméra tridimensionnelle.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessin annexés :
- la figure 1 représente un circuit électronique d'un capteur de temps de vol ;
- la figure 2 représente un premier signal électrique utilisé dans le circuit électronique de la figure 1 ; et
- la figure 3 représente un second signal électrique utilisé dans le circuit électronique de la figure 1.

Un capteur de temps de vol, tel qu'une caméra tridimensionnelle basée sur le principe du temps de vol (en anglais *"ToF 3D caméra"* pour *"Time of Flight 3D caméra"),* comprend au moins un élément émetteur de rayonnement électromagnétique 2 (typiquement une ou plusieurs diode(s) électroluminescente(s) émettant dans l'infrarouge) et un élément récepteur de rayonnement électromagnétique 4, tel qu'une matrice de réception formée de pixels.

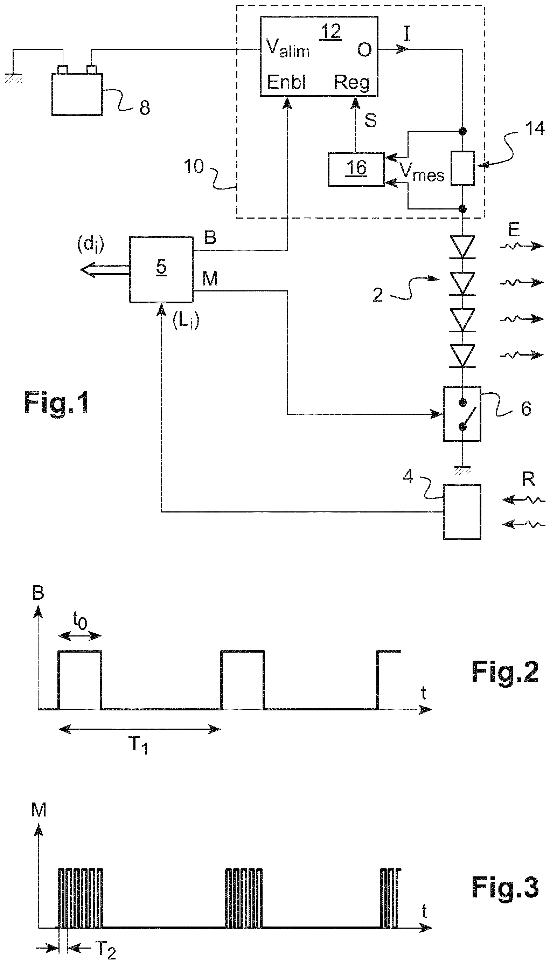

Le rayonnement E émis par l'élément émetteur 2 (généralement à travers un système optique d'émission non représenté en figure 1) est réfléchi en direction de l'élément récepteur 4 (référence R en figure 1) par le premier objet rencontré sur le trajet du rayonnement E.

En mesurant le temps séparant l'émission d'un signal donné par l'élément émetteur 2 et la réception d'un signal correspondant par l'élément récepteur 4, on peut évaluer la distance du premier objet rencontré susmentionné.

Dans le cas déjà mentionné où l'élément récepteur 4 est une matrice de réception, un système optique de réception (tel qu'une lentille) est placé en regard de l'élément récepteur 4 de telle sorte que chaque pixel de l'élément récepteur 4 reçoit le signal réfléchi R provenant d'une direction particulière de l'angle solide analysé par le capteur de temps de vol.

Comme visible en figure 1, une unité de commande 5 (par exemple un microcontrôleur) commande l'émission du rayonnement E par l'élément émetteur 2, comme décrit ci-après, puis analyse les signaux Lᵢ mesurés par l'élément récepteur 4 (ici pour les différents pixels de la matrice) de manière à déterminer la distance dᵢ du premier objet rencontré (ici pour une pluralité de directions de l'espace faisant face au capteur de temps de vol) selon le principe rappelé ci-dessus.

Cette distance dᵢ (ou ces distances dᵢ) est (sont) transmise(s) par l'unité de commande 5 à un autre système électronique (non représenté) pour utilisation par celui-ci.

Par exemple, dans le domaine automobile, le capteur de temps de vol peut être placé à l'avant du véhicule afin de construire une cartographie de l'environnement avant du véhicule et/ou de détecter un obstacle et/ou d'évaluer la vitesse d'un autre véhicule situé à l'avant (par dérivation de la distance d;).

Selon une autre possibilité envisageable, le capteur de temps de vol peut être placé dans l'habitacle du véhicule (par exemple face au conducteur du véhicule) et les distances dᵢ déterminées par l'unité de commande 5 peuvent être utilisées au sein d'un algorithme de reconnaissance gestuelle.

Comme représenté en figure 1, l'élément émetteur 2 est alimenté (en courant électrique) par un circuit d'alimentation 10.

Un interrupteur commandé 6 est par ailleurs monté en série avec le circuit d'alimentation 10 et l'élément émetteur 2 afin de pouvoir générer (sous la commande d'un signal de modulation M produit par l'unité de commande 5 et représenté en figure 3) une modulation du rayonnement E émis par l'élément émetteur 2. Une telle modulation est utilisée dans le cadre du fonctionnement du capteur de temps de vol afin d'émettre un signal reconnaissable par l'élément récepteur 4 (après réflexion sur le premier objet rencontré).

Le circuit d'alimentation 10 comprend un régulateur de courant 12, un élément de mesure 14 et un circuit de conversion, ici un filtre passe-bas 16.

Le régulateur de courant 12 comprend une borne d'alimentation Vₐₗᵢₘ reliée à une borne de la batterie 8 du véhicule, une borne d'activation Enbl, une borne de régulation Reg et une borne de sortie O où est délivré le courant I produit par le régulateur de courant 12.

Le régulateur de courant 12 est conçu pour délivrer sur la borne de sortie O, lorsqu'une tension prédéterminée est présente sur la borne d'activation Enbl, un courant I régulé en fonction de la tension présente sur la la borne de régulation Reg.

L'élément de mesure 14, ici une résistance, est monté en série avec l'élément émetteur 2 et l'interrupteur commandé 6 entre la borne de sortie (ou borne de production de courant) O et la masse du circuit électronique (reliée quant à elle à l'autre borne de la batterie 8 du véhicule comme montré en figure 1).

L'élément de mesure 14 fournit ainsi un signal (ici la tension Vₘₑₛ aux bornes de l'élément de mesure 14) représentatif du courant traversant cet élément de mesure 4.

Ce signal Vₘₑₛ est transmis à la borne de régulation Reg du régulateur de courant 12 à travers le circuit de conversion, c'est-à-dire ici à travers le filtre passe-bas 16. Ainsi, le filtre passe-bas 16 transmet sur la borne de régulation Reg un signal S lissé, limité ici aux composantes basse-fréquence du signal représentatif Vₘₑₛ.

En variante, le circuit de conversion 16 pourrait être un détecteur de crête. Un tel détecteur de crête permet lui aussi de transmettre sur la borne de régulation Reg un signal S lissé, exempt des variations présentes dans le signal Vₘₑₛ du fait de la modulation du courant I par l'interrupteur commandé 6 sous la commande du signal de modulation M.

Selon une autre variante encore, le circuit de conversion 16 pourrait inclure un convertisseur analogique-numérique (apte à convertir le signal Vₘₑₛ en une séquence de données) et un processeur (apte à générer, sur une de ses bornes de sortie, un signal S lissé produit par traitement numérique sur la base de la séquence de données susmentionnée).

L'élément de mesure 14, le circuit de conversion 16 et la borne de régulation Reg forment une boucle de régulation, ou boucle de rétroaction, du régulateur de courant 12 permettant d'obtenir un courant I prédéterminé sur la borne de sortie O.

On présente ci-dessous le fonctionnement du circuit électronique qui vient d'être décrit.

Afin d'émettre une salve de rayonnement E par l'élément émetteur 2, l'unité de commande 5 commande périodiquement (avec une période T₁) l'activation du régulateur de courant 2 pendant une durée t₀ prédéterminée, ici en appliquant sur la borne d'activation Enbl du régulateur de courant 12 un signal B correspondant (formé comme représenté en figure 2 d'un échelon périodique de tension de durée t₀ et de période T₁). On a donc t₀ < T₁.

Pendant ces plages d'activation du régulateur de courant 12, l'unité de commande 5 émet par ailleurs le signal de modulation M déjà mentionné à destination d'une borne de commande de l'interrupteur commandé 6 afin de permettre (successivement et de manière répétée) l'ouverture et la fermeture de l'interrupteur commandé 6 conformément au signal de modulation M (dont un exemple est représenté en figure 3).

Le signal de modulation M est par exemple un signal carré périodique de période T₂, avec en général T₂ < 0,1.t₀ (et par conséquent T₂ < 0,1.T₁). On remarque à cet égard que la figure 3 est purement illustrative et ne représente pas le cas qui vient d'être décrit (où chaque salve de durée t₀ comporte au minimum 10 impulsions du signal de modulation M).

En pratique, la durée t₀ est par exemple comprise entre 50 µs et 600 µs. La période T₁ peut quant à elle être comprise entre 1 ms et 4 ms, tandis que la période T₂ est par exemple comprise entre 20 ns et 100 ns.

Du fait de la commande de l'interrupteur commandé 6 par le signal de modulation M, le courant I (produit par le générateur de courant 12) ne circule dans l'élément émetteur 2 (ou les éléments émetteurs) qu'aux instants où le signal de modulation M est au niveau haut (c'est-à-dire pendant les impulsions formées dans ce signal de modulation M).

Afin d'obtenir un fonctionnement particulièrement efficace, les fronts montants et les fronts descendants du signal de modulation M sont de courte durée.

On obtient ainsi le rayonnement E requis pour faire fonctionner le capteur de temps de vol comme expliqué plus haut.

Toutefois, grâce au filtre passe-bas 16, le signal S reçu sur la borne de régulation Reg du régulateur de courant 12 ne comporte pas les variations brutales présentes dans le signal représentatif Vₘₑₛ et dues à l'interruption du courant I à la fréquence du signal de modulation M.

A cet égard, le filtre passe-bas 16 a typiquement une fréquence de coupure comprise entre 1/t₀ et 1/T₂ (soit inférieure à la fréquence 1/T₂ du signal de modulation), par exemple comprise entre 20 kHz et 50 MHz.

Ainsi, la régulation du courant I par le régulateur de courant 12 (au moyen de la boucle de régulation, ou boucle de rétroaction, comprenant l'élément de mesure 14, le filtre passe-bas 16 et la borne de régulation Reg) fonctionne correctement malgré les variations rapides d'intensité du courant dans l'élément émetteur 2 provoquées par l'interrupteur commandé 6 en vue de la modulation nécessaire au fonctionnement du capteur de temps de vol.

On remarque qu'en fonctionnement nominal (le courant I ayant atteint la consigne), le signal S en sortie du filtre passe bas correspond à une proportion seulement du signal représentatif Vₘₑₛ lorsque le courant I circule dans l'élément de mesure 14 (le signal représentatif Vₘₑₛ étant nul le reste du temps). Cette situation est prise en compte lors de la définition de la boucle de régulation (en augmentant par exemple en proportion la valeur de la résistance formant l'élément de mesure 14) afin d'obtenir le courant de consigne I en sortie du régulateur de courant 12 en présence des interruptions prédéterminées de ce courant I au cours d'une salve.

## Revendications

1. Circuit électronique comprenant au moins un élément émetteur de rayonnement (2), **caractérisé par** :
- un régulateur de courant (12) avec une borne de régulation (Reg) et une borne de production de courant (O) reliée à l'élément émetteur de rayonnement (2);
- un élément de mesure (14) produisant un signal (Vₘₑₛ) représentatif du courant le traversant ;
- un interrupteur (6) commandé par un signal de modulation (M) de manière à successivement ouvrir et fermer un chemin électrique passant par la borne de production de courant (O), l'élément émetteur de rayonnement (2) et l'élément de mesure (14), et
- un circuit de conversion (16) interposé entre l'élément de mesure (14) et le régulateur de courant (12), et conçu pour transformer le signal représentatif (Vₘₑₛ) en un signal lissé (S) destiné à la borne de régulation (Reg),
l'interrupteur (6) commandé par le signal de modulation (M) étant monté en série avec l'élément émetteur de rayonnement (2) et la masse du circuit électronique.

2. Circuit électronique selon la revendication 1, dans lequel l'élément émetteur est une diode électroluminescente (2).

3. Circuit électronique selon la revendication 1 ou 2, dans lequel le rayonnement émis par l'élément émetteur (2) est un rayonnement infrarouge.

4. Circuit électronique selon l'une des revendications 1 à 3, comprenant une pluralité d'éléments émetteurs montés en série sur le chemin électrique.

5. Circuit électronique selon l'une des revendications 1 à 4, dans lequel l'élément de mesure est une résistance (14).

6. Circuit électronique selon l'une des revendications 1 à 5, dans lequel le circuit de conversion est un filtre passe-bas (16).

7. Circuit électronique selon la revendication 6, dans lequel le filtre passe-bas (16) à une fréquence de coupure inférieure à la fréquence du signal de modulation (M).

8. Circuit électronique selon l'une des revendications 1 à 5, dans lequel le circuit de conversion est un détecteur de crête.

9. Circuit électronique selon l'une des revendications 1 à 8, dans lequel le signal de modulation (M) est périodique de période inférieure à 100 ns.

10. Capteur de temps de vol comprenant un circuit électronique selon l'une des revendications 1 à 9.

11. Capteur de temps de vol selon la revendication 10, comprenant un élément récepteur (4) conçu pour recevoir, après réflexion, le rayonnement émis par l'élément émetteur de rayonnement (2).

12. Capteur de temps de vol selon la revendication 11, dans lequel l'élément récepteur (4) est une matrice de réception.

## Patentansprüche

1. Elektronische Schaltung, die mindestens ein strahlungsemittierendes Element (2) beinhaltet, **gekennzeichnet durch**:
- einen Stromregler (12) mit einem Regelungsanschluss (Reg) und einem Stromerzeugungsanschluss (O), der mit dem strahlungsemittierenden Element (2) verbunden ist;
- ein Messelement (14), das ein Signal (Vₘₑₛ) erzeugt, das für den Strom, der durch es hindurchfließt, repräsentativ ist;
- einen Schalter (6), der durch ein Modulationssignal (M) gesteuert wird, um einen elektrischen Pfad, der durch den Stromerzeugungsanschluss (O), das strahlungsemittierende Element (2) und das Messelement (14) verläuft, nacheinander zu öffnen und zu schließen, und
- eine Wandlerschaltung (16), die zwischen dem Messelement (14) und dem Stromregler (12) eingefügt ist und dazu ausgelegt ist, das repräsentative Signal (Vₘₑₛ) in ein geglättetes Signal (S) zu transformieren, das für den Regelungsanschluss (Reg) bestimmt ist,
wobei der Schalter (6), der durch das Modulationssignal (M) gesteuert wird, mit dem strahlungsemittierenden Element (2) und der Masse der elektronischen Schaltung in Reihe geschaltet ist.

2. Elektronische Schaltung nach Anspruch 1, wobei das emittierende Element eine Leuchtdiode (2) ist.

3. Elektronische Schaltung nach Anspruch 1 oder 2, wobei die durch das emittierende Elemente (2) emittierte Strahlung eine Infrarotstrahlung ist.

4. Elektronische Schaltung nach einem der Ansprüche 1 bis 3, die eine Vielzahl von emittierenden Elementen beinhaltet, die in dem elektrischen Pfad in Reihe geschaltet sind.

5. Elektronische Schaltung nach einem der Ansprüche 1 bis 4, wobei das Messelement ein Widerstand (14) ist.

6. Elektronische Schaltung nach einem der Ansprüche 1 bis 5, wobei die Wandlerschaltung ein Tiefpassfilter (16) ist.

7. Elektronische Schaltung nach Anspruch 6, wobei der Tiefpassfilter (16) eine Grenzfrequenz aufweist, die kleiner als die Frequenz des Modulationssignals (M) ist.

8. Elektronische Schaltung nach einem der Ansprüche 1 bis 5, wobei die Wandlerschaltung ein Spitzenwertdetektor ist.

9. Elektronische Schaltung nach einem der Ansprüche 1 bis 8, wobei das Modulationssignal (M) periodisch mit einer Periode kleiner als 100 ns ist.

10. Flugzeitsensor, der eine elektronische Schaltung nach einem der Ansprüche 1 bis 9 beinhaltet.

11. Flugzeitsensor nach Anspruch 10, der ein Empfangselement (4) beinhaltet, das dazu ausgelegt, die durch das strahlungsemittierende Element (2) emittierte Strahlung nach einer Reflexion zu empfangen.

12. Flugzeitsensor nach Anspruch 11, wobei das Empfangselement (4) eine Empfangsmatrix ist.

## Claims

1. Electronic circuit comprising at least one radiation-emitting element (2), **characterized by**:
- a current regulator (12) with a regulation terminal (Reg) and a current-producing terminal (O) connected to the radiation-emitting element (2);
- a measuring element (14) producing a signal (Vₘₑₛ) representative of the current flowing through it;
- a switch (6) controlled by a modulation signal (M) so as to successively open and close an electrical path passing through the current-producing terminal (O), the radiation-emitting element (2) and the measuring element (14), and
- a conversion circuit (16) interposed between the measuring element (14) and the current regulator (12), and designed to convert the representative signal (Vₘₑₛ) into a smoothed signal (S) intended for the regulation terminal (Reg),
the switch (6) controlled by the modulation signal (M) being connected in series with the radiation-emitting element (2) and ground of the electronic circuit.

2. Electronic circuit according to Claim 1, wherein the emitting element is a light-emitting diode (2).

3. Electronic circuit according to Claim 1 or 2, wherein the radiation emitted by the emitting element (2) is infrared radiation.

4. Electronic circuit according to one of Claims 1 to 3, comprising a plurality of emitting elements connected in series on the electrical path.

5. Electronic circuit according to one of Claims 1 to 4, wherein the measuring element is a resistor (14).

6. Electronic circuit according to one of Claims 1 to 5, wherein the conversion circuit is a low-pass filter (16) .

7. Electronic circuit according to Claim 6, wherein the low-pass filter (16) has a cutoff frequency lower than the frequency of the modulation signal (M).

8. Electronic circuit according to one of Claims 1 to 5, wherein the conversion circuit is a peak detector.

9. Electronic circuit according to one of Claims 1 to 8, wherein the modulation signal (M) is periodic with a period of less than 100 ns.

10. Time-of-flight sensor comprising an electronic circuit according to one of Claims 1 to 9.

11. Time-of-flight sensor according to Claim 10, comprising a receiving element (4) designed to receive, after it has been reflected, the radiation emitted by the radiation-emitting element (2).

12. Time-of-flight sensor according to Claim 11, wherein the receiving element (4) is a reception matrix array.
